# EUROPEAN PATENT SPECIFICATION

(11) **EP 3 998 875 B1**
(45) Date of publication and mention of the grant of the patent: **10.09.2025**
(21) Application number: 20744132.0
(22) Date of filing: 09.07.2020
(51) Int. Cl.: A24D 3/06, A24D 1/20

(54) **AEROSOL-GENERATING ARTICLE SUITABLE FOR USE IN AN AEROSOL-GENERATING DEVICE**
AEROSOLERZEUGENDER ARTIKEL ZUR VERWENDUNG MIT EINER AEROSOLERZEUGENDEN VORRICHTUNG
ARTICLE DE GÉNÉRATION D'AÉROSOL APPROPRIÉ POUR ÊTRE UTILISÉ DANS UN DISPOSITIF DE GÉNÉRATION D'AÉROSOL

(30) Priority: 15.07.2019 US 201916511567
(43) Date of publication of application: 25.05.2022
(73) Proprietor: BIO ON S.p.A., 10128 Torino (IT)
(72) Inventor: SAETTONE, Paolo, 40016 San Giorgio di Piano (BO) (IT); FERRARI, Gianluca, 40016 San Giorgio di Piano (BO) (IT); MONACO, Ilaria, 40016 San Giorgio di Piano (BO) (IT); RAHMAN, Mohammad Arifur, Potsdam, New York 13699 (US); HOLSEN, Thomas M., Potsdam, New York 13699 (US); HOPKE, Philip K., Potsdam, New York 13699 (US); BARTHEL, Markus, 40016 San Giorgio di Piano (BO) (IT); COMES FRANCHINI, Mauro, 40016 San Giorgio di Piano (BO) (IT)
(74) Representative: Bottero, Carlo
(86) International application number: PCT/IB2020/056456
(87) International publication number: WO 2021/009624

(56) References cited:
- WO-A2-2013/098405
- CA-A1- 3 047 236
- US-A1- 2012 000 480
- US-A1- 2017 354 179
- US-A1- 2019 082 735

## Description

### Background of the invention

The present invention relates to an aerosol-generating article suitable for use in an aerosol-generating device. More particularly, the present invention relates to an aerosol-generating article comprising an aerosol-forming substrate, a support element located immediately downstream of the aerosol-forming substrate, an aerosol-cooling element located downstream of the support element and an outer wrapper circumscribing the aerosol-forming substrate, the support element and the aerosol-cooling element, wherein the aerosol-cooling element is formed by a sheet of a polymeric composition that is pleated to define a plurality of longitudinally extending channels, wherein the sheet is coated with at least one PHA, the aerosol-generating article being suitable for use in an aerosol-generating device to quench reactive oxygen species (ROS) in the aerosol produced by the aerosol-generating article.

Conventional smoking articles, such as cigarettes, usually have a substantially cylindrical rod-shaped structure and include a roll of smokable material, such as shredded tobacco, surrounded by a paper wrapper, thereby forming a so-called "smokable rod". Normally, a cigarette has a cylindrical filter element aligned in an end-to-end relationship with the smokable rod. Typically, a filter element comprises a bundle of cellulose acetate fibers circumscribed by a paper material and the filter element is attached to one end of the smokable rod using a circumscribing wrapping material known as "tipping material". Conventional cellulose acetate fibers (which are produced in the form of a bundle, known also as "tow") are bound with an appropriate plasticizer, usually glyceryl triacetate (triacetin), which is able to bond the staple fibers to one another to produce a relatively firm and rigid structure that does not soften or collapse during smoking.

Besides conventional cigarettes that are smoked by burning the tobacco at high temperatures, alternative smoking systems have been recently put on the market, conventionally known as "heat-not-burn tobacco systems", such as the IQOS^{™} kit by Philip Morris, where the tobacco rod is not burnt but only heated to generate an aerosol that contains nicotine and other chemicals. Typically, in such heated smoking articles an aerosol is generated by the transfer of heat from a heat source to a physically separate aerosol-forming substrate or material, which may be located within, around or downstream of the heat source. During smoking, volatile compounds are released from the aerosol-forming substrate by heat transfer from the heat source and entrained in air drawn through the smoking article. As the released compounds cool, they condense to form an aerosol that is inhaled by the user.

Aerosol-generating articles are described for instance in WO 2013/098405, WO2013/098410 and CA3047236. Such aerosol-generating articles comprise, in a linear sequential arrangement, an aerosol-forming substrate, a support element located immediately downstream of the aerosol-forming substrate, a transfer section where the aerosol is cooled, located downstream of the support element, and an outer wrapper circumscribing the aerosol-forming substrate, the support element and the transfer section. The aerosol-generating article is used in an aerosol-generating system comprising an electrically heated aerosol-generating device comprising an internal heating element. The aerosol-forming substrate is penetrable by the heating element of the aerosol-generating device. The transfer section may be constituted by a hollow tubular element, as described in WO 2013/098410. Alternatively, the transfer section is made more effective as aerosol-cooling element, as disclosed in WO 2013/098405, by using a sheet of a suitable material that has been crimped, pleated, gathered or folded to define a plurality of longitudinally extending channels, which is wrapped in a wrapper material. The sheet may be made from various materials, such as metallic foil, polymeric material, substantially non-porous paper or cardboard. More specifically, the aerosol-cooling element may comprise a gathered sheet of a material selected from: polyethylene (PE), polypropylene (PP), polyvinylchloride (PVC), polyethylene terephthalate (PET), polylactic acid (PLA), cellulose acetate (CA), and aluminium foil. More preferably, the aerosol-cooling element comprises a gathered sheet of a compostable material, such as a non-porous paper or a biodegradable polymeric material, such as polylactic acid or a grade of Mater-Bi^{®} (a commercially available family of starch based copolyesters).

CA304736 discloses an aerosol-generating article comprising an aerosol-forming substrate, a filter segment located immediately downstream of the aerosol-forming substrate, wherein the filter segment may have a tubular structure, an aerosol-cooling element located downstream of the tubular structure, comprising a plurality of channels and a wrapper circumscribing the aerosol-forming substrate, the tubular structure and the aerosol-cooling element. The aerosol-cooling element may be fabricated by a polymeric material, for example polyhydroxybutyrate (PHB).

### Summary of the invention.

Although the aerosol-generating articles are able to reduce the presence in the inhaled aerosol of harmful smoke constituents commonly produced by the combustion and pyrolytic degradation of tobacco in conventional cigarettes, the Applicant has faced the problem of further improving this ability, so as to render the current aerosol-generating articles even more appealing for the consumer that wishes to reduce the risks to the health associated with smoking tobacco.

The Applicant has surprisingly found that at least one element including at least one polyhydroxyalkanoate (PHA), placed downstream with respect to the aerosol forming substrate, is able to quench reactive oxygen species (ROS) which are inevitably present in the volatile substances produced by heating the aerosol-forming substrate. It is well known that ROS are toxic to cells, being responsible for oxidative stress. More than a hundred diseases are related to ROS, such as diabetes, inflammatory immunization injuries, autoimmune systemic diseases, organizational injuries resulting from blood loss and cancer. The at least one element including at least one PHA is placed downstream with respect the aerosol-forming substrate, so that, when the heating element heats the aerosol-forming substrate, the volatile substances which are generated therefrom come into contact with the PHA. According to the invention the aerosol-cooling element is formed by a sheet of a polymeric composition that is pleated to define a plurality of longitudinally extending channels, wherein the sheet is coated with at least one PHA.

Therefore, according to a first aspect, the present invention relates to an aerosol-generating article comprising an aerosol-forming substrate, a support element located immediately downstream of the aerosol-forming substrate, an aerosol-cooling element located downstream of the support element and an outer wrapper circumscribing the aerosol-forming substrate, the support element and the aerosol-cooling element, wherein the aerosol-cooling element is formed by a sheet of a polymeric composition that is pleated to define a plurality of longitudinally extending channels, wherein the sheet is coated with at least one PHA.

According to another aspect, the present invention relates to a use of an aerosol-cooling element formed by a sheet of a polymeric composition that is pleated to define a plurality of longitudinally extending channels, the sheet being coated with at least one PHA, for quenching reactive oxygen species (ROS) in the aerosol produced by an aerosol-generating article comprising an aerosol-forming substrate, a support element located immediately downstream of the aerosol-forming substrate, said aerosol-cooling element located downstream of the support element and an outer wrapper circumscribing the aerosol-forming substrate, the support element and the aerosol-cooling element.

As used herein, with the term "aerosol-forming substrate" it is meant a substrate capable of releasing upon heating volatile compounds, which can form an aerosol. The aerosol generated from the aerosol-forming substrate may be visible or invisible and may include vapours, gases and/or droplets of condensed vapours.

As used herein, with the terms "upstream" and "downstream" it is meant to define the relative positions of elements, or portions of elements, of the aerosol-generating article in relation to the direction in which a user draws on the aerosol-generating article during use thereof.

The aerosol-generating article comprises two ends: a proximal end through which aerosol exits the aerosol-generating article and is delivered to a user and a distal end. In use, a user may draw on the proximal end in order to inhale aerosol generated by the aerosol- generating article.

As used herein, with the term "aerosol-cooling element" it is meant an element having a large surface area and a low resistance to draw. In use, an aerosol formed by volatile compounds released from the aerosol-forming substrate passes over and is cooled by the aerosol-cooling element before being inhaled by a user. In contrast to high resistance to draw filters and other mouthpieces, aerosol-cooling elements have a low resistance to draw. Chambers and cavities within an aerosol-generating article are also not considered to be aerosol cooling elements.

As used herein, with the term "aerosol-generating device" it is meant a device that interacts with an aerosol-forming substrate of an aerosol-generating article to generate an aerosol. Preferably, the aerosol-generating device is a smoking device that interacts with an aerosol-forming substrate of an aerosol-generating article to generate an aerosol that is directly inhalable into a user's lungs thorough the user's mouth.

For the purpose of the present description and of the claims that follow, except where otherwise indicated, all numbers expressing amounts, quantities, percentages, and so forth, are to be understood as being modified in all instances by the term "about". Moreover, all ranges include any combination of the maximum and minimum points disclosed and include any intermediate ranges therein, which may or may not be specifically enumerated herein.

According to a preferred embodiment, the support element is a hollow tubular element. Preferably, the hollow tubular element is made from fibers bonded together to form a filtering element, said fibers comprising at least one PHA. More preferably, said fibers comprises cellulose acetate fibers bonded together by means of at least one PHA surrounding the cellulose acetate fibers.

According to a preferred embodiment, the aerosol-generating article comprises a mouthpiece filter located at the extreme downstream end of the aerosol-generating article. Preferably, the mouthpiece filter is made from fibers bonded together to form a filtering element, said fibers comprising at least one PHA. Preferably, the mouthpiece filter is made from fibers bonded together to form a filtering element, said fibers comprising cellulose acetate fibers bonded together by means of at least one PHA surrounding the cellulose acetate fibers.

### Detailed description of the invention.

As regards the aerosol-forming substrate, it preferably comprises tobacco, more preferably a gathered sheet of crimped homogenised tobacco material circumscribed by a wrapper. Preferably, the crimped sheet of homogenised tobacco material comprises glycerin as an aerosol-former.

As regards the PHA to be used in the present invention, it is preferably a polymer containing repeating units of formula (I):

-O-CHR₁-(CH₂)ₙ-CO- (I)

where:
R₁ is selected from: C₁-C₁₂ alkyls, C₄-C₁₆ cycloalkyls, C₂-C₁₂ alkenyls, optionally substituted with at least one group selected from: halogen (F, Cl, Br), - CN, -OH, -OOH, -OR, -COOR (R = C₁-C₄ alkyl, benzyl);
n is zero or is an integer from 1 to 6, preferably is 1 or 2.

Preferably, R₁ is methyl or ethyl, and n is 1 or 2.

The PHAs can either be homopolymers, copolymers, or terpolymers. In the case of copolymers or terpolymers, they can consist of different repeating units of formula (I), or of at least one repeating unit of formula (I) in combination with at least one repeating unit deriving from comonomers that are able to copolymerize with hydroxyalkanoates, such as lactones or lactams. In the latter case, the repeating units of formula (I) are present in an amount equal to at least 10% in moles with respect to the total moles of repeating units.

Particularly preferred repeating units of formula (I) are those deriving from: 3-hydroxybutyrate, 3-hydroxyvalerate, 3-hydroxyhexanoate, 3-hydroxyoctanoate, 3-hydroxyundec-10-enoate, 4-hydroxyvalerate.

Particularly preferred PHAs are: polyhydroxybutyrate (PHB), poly-3-hydroxyvalerate (PHV), poly-3-hydroxyhexanoate (PHH), poly-3-hydroxyoctanoate (PHO), poly(3-hydroxybutyrate-co-3-hydroxyvalerate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundecen-10-enoate) (PHOU), poly(3-hydroxybutyrate-co-3-hydroxyvalerate-4-hydroxyvalerate) (PHBVV), polyhydroxybutyrate-hydroxyvalerate copolymer, or mixtures thereof.

According to the purposes of the present invention, particularly preferred PHAs are polyhydroxybutyrate (PHB) and poly(3-hydroxybutyrate-co-3-hydroxyvalerate) (PHBV).

Preferably, the PHA has a weight-average molecular weight (M_{w}) ranging from 10,000 to 1,000,000 Da.

As for the production of PHA, this is preferably achieved by microbial fermentation of an organic substrate (for example carbohydrates or other fermentable substrates, such as glycerol) through a strain of microorganisms capable of producing PHA, and subsequent recovery of PHA from the cell mass. For further details see, for example patent applications WO 99/23146, WO 2011/045625 and WO 2015/015395. Substrates suitable for the production of PHA by fermentation can be obtained in particular from the processing of vegetables, for example juices, molasses, pulps derived from the processing of sugar beet, sugar cane. These substrates generally contain, in addition to sucrose and other carbohydrates, organic growth factors, nitrogen, phosphorus and/or other minerals useful as nutrients for cell growth. An alternative is glycerol, a low-cost organic carbon source, being a byproduct of biodiesel production, which can optionally be used in a mixture with levulinic acid (see, for example, US 8 956 835 B2).

As reported hereinabove, the PHA is preferably included in the aerosol-cooling element. This can be achieved according to two different embodiments.

In a first embodiment, the aerosol-cooling element is formed by a sheet of a polymeric composition that is pleated to define a plurality of longitudinally extending channels, wherein the polymeric composition comprises at least one PHA.

The polymeric composition comprising the at least one PHA can be formulated according to known techniques, and can include as polymeric base 100% by weight of PHA, or preferably a mixture of from 60% to 90% by weight of PHA and from 10% to 40% by weight of at least one different biodegradable/compostable polymer, such as polylactide (PLA), poly(butylene-*co*-adipate-*co*-terephthalate) (PBAT), poly(butylene-*co*-succinate) (PBS), poly(butylene-*co*-succinate-*co-*adipate) (PBSA), polycaprolactone (PCL), and mixtures thereof), the percentage being expressed with respect to the total weight of the polymeric base.

The polymeric composition may further comprise at least one plasticizer, usually in an amount of from 2 to 15% by weight, based on the total weight of the polymeric base. Preferably, the plasticizer may be selected from natural or biobased plasticizers, such as natural oils (e.g. linseed, castor, palm, flax and coconut oil, hydrogenated and non-hydrogenated derivatives thereof, glycerol and citric esters, and mixtures thereof).

Other possible additives of the polymeric composition may be e.g.: processing aids; fillers (e.g. kaolin, talc, chalk, silica, montmorillonite and mixtures thereof); primary or secondary antioxidants.

The sheet may be produced according to known techniques, for instance by extruding the polymeric composition through a die to form the sheet, that is then recovered and wound by means of a chill roll. To form the aerosol-cooling element, the sheet is then pleated and cut to the desired length according to known techniques.

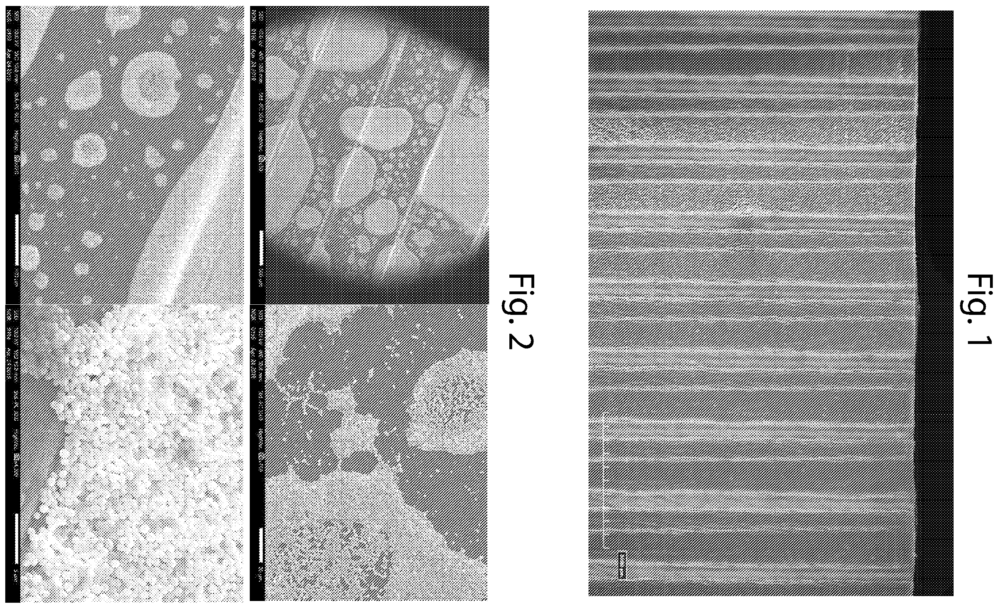

In Figure 1 an image of the pleated sheet is reported, taken by means of an optical microscope.

In a second embodiment, the aerosol-cooling element is formed by a sheet of a polymeric material that is pleated to define a plurality of longitudinally extending channels, wherein the sheet is coated with at least one PHA. In this case, the sheet may be made from any suitable polymeric composition, preferably from a biodegradable/compostable polymer material, such as: polylactide (PLA), poly(butylene-*co*-adipate-*co*-terephthalate) (PBAT), poly(butylene-co-succinate) (PBS), poly(butylene-*co*-succinate-*co*-adipate) (PBSA), polycaprolactone (PCL), and mixtures thereof). The pleated sheet is then coated with the PHA. The coating may be carried out by known techniques. Preferably, the coating is carried out by spraying an aqueous suspension of the PHA onto the pleated sheet. The spraying may be performed on only one side of the pleated sheet, or on both sides. After spraying, the coated pleated sheet is dried, e.g. at room temperature or in an oven at a temperature not exceeding 80°C (e.g. at 40°C for 1 hour).

In Figure 2 images of the surface of the pleated sheet coated with PHB is reported, taken by means of a SEM electronic microscope. The white spots and particles in the images are formed by the PHB which adheres to the sheet material.

Figure 3 is a schematic cross-sectional diagram of an embodiment of an aerosol-generating article according to the present invention suitable for use with an aerosol generating-device.

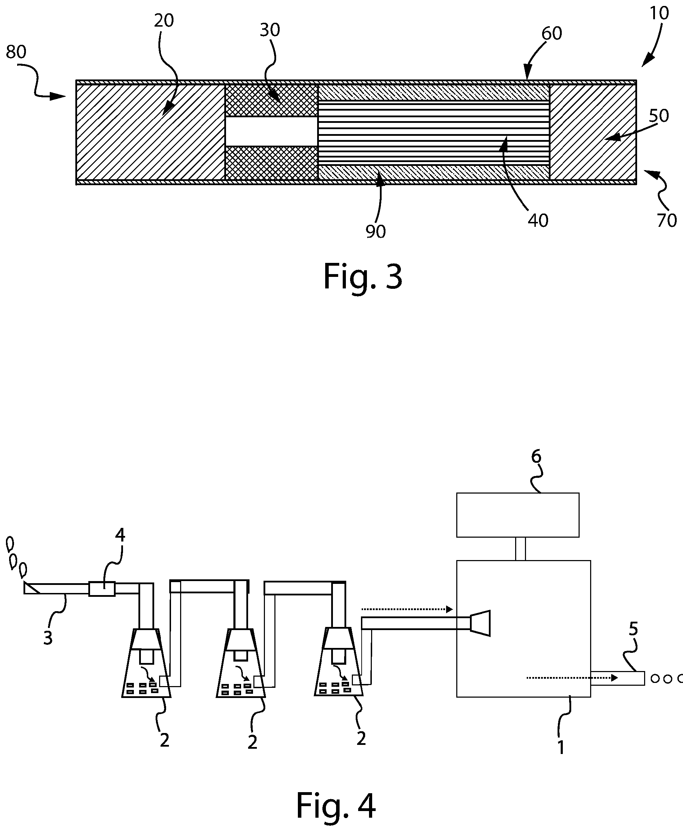

In Figure 3, the aerosol-generating article (10) comprises four elements arranged in coaxial alignment: an aerosol-forming substrate (20), a support element (30), an aerosol-cooling element (40), and a mouthpiece filter (50). These four elements are arranged sequentially and are circumscribed by an outer wrapper (60) to form the aerosol-generating article (10). The aerosol- generating article (10) has a proximal or mouth end (70), which a user inserts into his or her mouth during use, and a distal end (80) located at the opposite end of the aerosol-generating article (10) to the mouth end (70).

In use air is drawn through the aerosol-generating article by a user from the distal end (80) to the mouth end (70).

The aerosol-forming substrate (20) is located at the extreme distal or upstream end of the aerosol-generating article (10). The support element (30) is located immediately downstream of the aerosol-forming substrate (20) and abuts the aerosol-forming substrate (20). In the embodiment shown in Figure 3, the support element (30) is a hollow tube of cellulose acetate fibers. The support element (30) locates the aerosol-forming substrate (20) at the extreme distal end (80) of the aerosol-generating article (10) so that it can be penetrated by a heating element of an aerosol-generating device. The support element (30) acts to prevent the aerosol-forming substrate (20) from being forced downstream within the aerosol-generating article (10) towards the aerosol-cooling element (40) when a heating element of an aerosol-generating device is inserted into the aerosol-forming substrate (20). The support element (30) also acts as a spacer to space the aerosol-cooling element (40) of the aerosol-generating article 10 from the aerosol-forming substrate (20).

The aerosol-cooling element (40) is located immediately downstream of the support element (30) and abuts the support element (30). In use, volatile substances released from the aerosol-forming substrate (20) pass along the aerosol-cooling element (40) towards the mouth end (70) of the aerosol-generating article (10). The volatile substances may cool within the aerosol-cooling element (40) to form an aerosol that is inhaled by the user. In the embodiment illustrated in Figure 3, the aerosol-cooling element comprises a pleated sheet circumscribed by a wrapper (90). The pleated sheet defines a plurality of longitudinal channels that extend along the length of the aerosol-cooling element (40). The mouthpiece filter (50) is located immediately downstream of the aerosol-cooling element (40) and abuts the aerosol-cooling element (40).

To assemble the aerosol-generating article (10), the four elements described above are aligned and tightly wrapped within the outer wrapper (60). The outer wrapper may be a conventional cigarette paper.

As disclosed hereinabove, the aerosol-cooling element includes at least one PHA. With reference to Figure 3, the aerosol-cooling element (40) is depicted. Advantageously, the PHA may be included both in the aerosol-cooling element (40) and in at least one element selected from the support element (30) and the mouthpiece filter (50).

Further details about the structure, manufacturing and use of an aerosol-generating article as described above are reported in WO 2013/098410 and WO 2013/098405.

The Applicant wishes to underline that the use of at least one PHA for manufacturing at least one element of the the aerosol-generating article improves biodegradability and environmental sustainability of the article, since it is well known that PHAs are biodegradable materials which are produced from renewable sources.

As regards the embodiments wherein the PHA is used as bonding agent for cellulose acetate fibers to form a filtering element, the Applicant has found that at least one PHA can be advantageously used as bonding agent for cellulose acetate fibers, instead of triacetin or other bonding agents, commonly used in the art. The PHA is able to bond the cellulose acetate fibers when applied on the fiber surface, causing the formation of random connection points to retain a space between the fibers suitable for a correct pressure drop during smoking and to impart a suitable hardness to the filter element. Moreover, since the PHA has a relatively high melting point and is substantially insoluble in water, it does not soften or melt when it is subjected to the warm and humid smoke produced during cigarette smoking, so as to prevent softening or collapsing of the filter element during smoking.

The above filter element may be produced by a process which comprises:
embedding a bundle of cellulose acetate fibers with an aqueous suspension of at least one PHA to obtain a wet bundle of cellulose acetate fibers covered by the PHA suspension;
shaping the wet bundle in the form of a continuous elongated element;
heating the continuous elongated element to a temperature of from 140°C to 180°C for a time sufficient to melt the PHA and evaporate the water;
cooling the heated continuous elongated element to obtain crystallization of the PHA;
cutting the so obtained continuous elongated element into segments of a predetermined length.

The following examples are provided to further illustrate the invention.

### EXAMPLE 1.

A polymeric composition was produced having the following ingredients:

| | |
|---|---|
| PHB (polyhydroxybutyrate) | 60.70% by weight |
| PLA (polylactide) | 30.00% by weight |
| Plasticizer | 6.00% by weight |
| Processing aid | 2.40% by weight |
| Antioxidant | 0.90% by weight |

The PHB had Mw of about 500 KDa.

The composition was produced in a LabTech LMX5-VS highspeed mixer applying speeds ranging from 100 rpm to 900 rpm.

The so obtained composition, in the form of powder, was extruded in a twinscrew extruder (LabTech LTE 16-40) with a volumetric hopper feeder. The extruded material was formed in the form of a sheet by means of a chill roll unit (LabTech LBCR-150) connected to the extruder head. The sheet had a thickness of about 150 µm.

The sheet was cut into strips of 11 mm length, 1.8 mm height, each having a weight of about 0.260-0.360 g.

The strips were pleated by a mechanical tool and then folded and rolled to obtain aerosol-cooling elements having the same dimensions of those which were found in HEETs^{™} cigarettes for I-QOS^{™} (Philip Morris). Such cigarettes (or, more precisely, aerosol-generating articles) had the structure as shown in Figure 3. The aerosol-cooling elements in the HEETs^{™} cigarettes are made from PLA (polylactide).

### EXAMPLE 2-3.

The aerosol-cooling elements found in the HEETs^{™} cigarettes, made from PLA (polylactide), were extracted, unfolded and then sprayed with an aqueous suspension of PHB (Mw: 443 KDa) (Example 2) or of poly(3-hydroxybutyrate-co-3-hydroxyvalerate (PHBV) (Mw: 700 KDa) (Example 3). The concentration of PHB and PHBV in the aqueous suspensions was 10 % w/v. The suspensions were sprayed on only one side of the PLA pleated strips or on both sides. The sprayed strips were then dried in an oven at 40°C for 1 hour.

### EXAMPLE 4: Determination of ROS.

### (a) Sampling system.

A computer-controlled Single Cigarette Smoking Machine (SCSM, CH Technologies) was used to generate mainstream smoke under standard smoking conditions (cigarettes burn for 5 min with a 2-s puff duration, puff interval 2-s and 65-mL puff volume). To generate e-cigarette vapor an I-QOS (2.4 Plus) "Heat-Not-Burn" device was used. Three impingers were filled with 20 mL of a 2',7'-dichlorofluorescin-horseradish peroxidase (DCFH-HRP) solution and used to collect gas-phase ROS from mainstream smoke.

The experimental system is shown schematically in Figure 4. Commercially available HEETs^{™} Marlboro^{™} (Gold) cigarettes were used to collect ROS from mainstream smoke. In Figure 4, the SCSM (1) is connected to the three impingers (2) containing the DCFH-HRP solution which receives the smoke produced by the cigarette (3) connected to the impingers by means of a filter holder (4). The exhaust smoke exits the SCSM through a pipe (5). The SCSM is connected to a laptop (6) in order to control puff duration and puff interval of the cigarette smoking.

### (b) Sample Preparation and Analysis.

- Preparation of Fluorescent Probes and Standards for ROS in cigarette smoke. The fluorescent probe used to determine ROS in this study was DCFH. A 1 mM stock solution was prepared by dissolving 2',7'-dichlorofluorescin diacetate (DCFH-DA; Calbiochem, USA) into ethyl alcohol (ACS grade, Pharmo, USA). A 10 mL solution was mixed with 40 mL 0.01 M sodium hydroxide (NaOH) and left in a dark room temperature for 30 min to hydrolyze. Then 200 mL of phosphate buffer, obtained by mixing sodium phosphate dibasic (Na₂HPO₄, Sigma Aldrich, MO, USA) with sodium phosphate dihydrogen phosphate anhydrous (NaH₂PO₄, Fluka, Germany) to achieve a pH of 7.2, was added to the solution. Horseradish peroxidase (HRP, Sigma Aldrich, USA) was used as the catalyst with a concentration of 0.5 units/mL. The final DCFH concentration of this working solution was 5 µM.

Equivalent H₂O₂ concentration was used to express the ROS concentrations by converting fluorescence intensity using a standard H₂O₂ calibration curve. Four H₂O₂ standards with the concentrations of 1.0, 2.0, 3.0, and 4.0 x 10⁻⁷ nmol were prepared by mixing 0.1 mL hydrogen peroxide (ACS grade, Sigma Aldrich, USA) with 3 mL DCFH-HRP working solution. Standard blanks were obtained by mixing 0.1 mL deionized Milli-Q water (resistivity > 18.2 MΩ) with probe. The standards were placed in cuvettes and incubated at 37°C in a water bath. Formation of 2,7-dichlorofluorescin was monitored by measuring fluorescence (excitation wavelength: 504 nm; emission wavelength: 524 nm) using a Shimadzu Spectrophotometer (model: RF-5301 PC, Japan).

### (c) Analysis of Reactive Oxygen Substances (ROS).

Subsequent to sampling, 3 mL of the reagent solution was removed from each impinger (each contains 20 mL), placed into a cuvette, and incubated for 15 min at 37°C in water bath. Generally, the fluorescence intensities of the solutions in impingers were within the range of the standards. After using the volume of the solution to get the amount of ROS in each impinger, the contents of all three impingers were combined. An aliquot of the solution was taken and the fluorescence intensity was measured. Sampling blanks were obtained by operating the smoking system without any cigarette burning and analyzed in the same way. Sampling blank values were subtracted from sample results.

The amount of ROS was also measured from the smoke produced by commercial cigarettes as reported in Table 1.

Further details about ROS analysis can be found in:
Jiayuan Zhao & Philip K. Hopke, "Concentration of Reactive Oxygen Species (ROS) in Mainstream and Sidestream Cigarette Smoke", Aerosol Science and Technology, 46:191-197, 2012.

The results are reported in Table 1. The data are the mean values measured on 12 samples for each type of aerosol-cooling element.

**Table 1.**

| Samples | PHA | PHA amount (mg) | Average ROS * (nmol/cigarette) | Standard Deviation | % ROS quenched |
|---|---|---|---|---|---|
| HEETs^{™} as such | -- | -- | 30.22 | 2.90 | -- |
| HEETs^{™} - Ex. 1 | PHB | 228 | 5.58 | 2.92 | 81% |
| HEETs^{™} - Ex. 2 (single side coated) | PHB | 6.5 | 15.80 | 0.49 | 48% |
| HEETs^{™} - Ex. 2 (double side coated) | PHB | 5.3 | 11.20 | 1.14 | 63% |
| HEETs^{™} - Ex. 3 (single side coated) | PHBV | 4.4 | 14.53 | 0.83 | 52% |
| HEETs^{™} - Ex. 2 (double side coated) | PHBV | 7.2 | 19.39 | 0.76 | 36% |

| | | | | | |
|---|---|---|---|---|---|
| * Detection limit: 1.5 nmol | | | | | |

The PHA amount is the amount in each aerosol-cooling element according to the present invention.

From the above data, it is clear the remarkable effect of ROS quenching in the aerosol generated by the aerosol-generating articles according to the invention, which contain the PHA.

Without being bound to any theory, the positive effect on ROS quenching by contacting the generated aerosol with the PHA is believed to be mainly due to the structure of the monomer unit -O-CHR₁-(CH₂)ₙ-CO-. The hydrogen linked to the ternary carbon atom -CHR₁- is particularly reactive with formation of a hydrogen radical that quenches the ROS, by inactivating the same via radical reaction.

## Claims

1. An aerosol-generating article (10) comprising:
an aerosol-forming substrate (20);
a support element (30) located immediately downstream of the aerosol-forming substrate (20);
an aerosol-cooling element (40) located downstream of the support element (30); and
an outer wrapper (60) circumscribing the aerosol-forming substrate (20), the support element (30) and the aerosol-cooling element (40);
wherein the aerosol-cooling element (40) is formed by a sheet of a polymeric composition that is pleated to define a plurality of longitudinally extending channels, wherein the sheet is coated with at least one PHA.

2. The aerosol-generating article according to claim 1, wherein the support element is a hollow tubular element made from fibers bonded together to form a filtering element.

3. The aerosol-generating article according to claim 2, wherein said fibers comprise at least one PHA.

4. The aerosol-generating article according to claim 2, wherein said fibers comprise cellulose acetate fibers bonded together by means of at least one PHA surrounding the cellulose acetate fibers.

5. The aerosol-generating article according to claim 1, comprising a mouthpiece filter located at the extreme downstream end of the aerosol-generating article, said mouthpiece filter being made from fibers bonded together to form a filtering element, said fibers comprising at least one PHA.

6. The aerosol-generating article according to claim 1, comprising a mouthpiece filter located at the extreme downstream end of the aerosol-generating article, said mouthpiece filter being made from fibers bonded together to form a filtering element, said fibers being cellulose acetate fibers bonded together by means of at least one PHA surrounding the cellulose acetate fibers.

7. The aerosol-generating article according to claim 1, wherein the aerosol-forming substrate comprises a gathered sheet of crimped homogenised tobacco material circumscribed by a wrapper, the tobacco material possibly containing glycerin as an aerosol-former.

8. The aerosol-generating article according to claim 1, wherein the PHA is a polymer containing repeating units of formula (I):
-O-CHR₁-(CH₂)ₙ-CO- (I)
where:
R₁ is selected from: C₁-C₁₂ alkyls, C₄-C₁₆ cycloalkyls, C₂-C₁₂ alkenyls, optionally substituted with at least one group selected from: halogen (F, Cl, Br), - CN, -OH, -OOH, -OR, -COOR (R = C₁-C₄ alkyl, benzyl);
n is zero or is an integer from 1 to 6, preferably is 1 or 2.

9. The aerosol-generating article according to claim 8, wherein the PHA is selected from: polyhydroxybutyrate (PHB), poly-3-hydroxyvalerate (PHV), poly-3-hydroxyhexanoate (PHH), poly-3-hydroxyoctanoate (PHO), poly(3-hydroxybutyrate-co-3-hydroxyvalerate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundecen-10-enoate) (PHOU), poly(3-hydroxybutyrate-co-3-hydroxyvalerate-4-hydroxyvalerate) (PHBVV), polyhydroxybutyrate-hydroxyvalerate copolymer, or mixtures thereof.

10. The aerosol-generating article according to claim 1, wherein the PHA has a weight-average molecular weight (M_{w}) ranging from 10,000 to 1,000,000 Da.

11. Use of an aerosol-cooling element formed by a sheet of a polymeric composition that is pleated to define a plurality of longitudinally extending channels, the sheet being coated with at least one PHA, for quenching reactive oxygen species (ROS) in the aerosol produced by an aerosol-generating article comprising: an aerosol-forming substrate; a support element located immediately downstream of the aerosol-forming substrate; said aerosol-cooling element located downstream of the support element; and an outer wrapper circumscribing the aerosol-forming substrate, the support element and the aerosol-cooling element.

## Patentansprüche

1. Aerosol erzeugender Artikel (10), umfassend:
ein Aerosol-bildendes Substrat (20);
ein Stützelement (30), das unmittelbar stromabwärts des Aerosol bildenden Substrats (20) angeordnet ist;
ein Aerosol-Kühlelement (40), das stromabwärts des Stützelements (30) angeordnet ist; und
eine äußere Umhüllung (60), die das Aerosol bildende Substrat (20), das Stützelement (30) und das Aerosol-Kühlelement (40) umschließt;
wobei das Aerosol-Kühlelement (40) durch eine Folie aus einer Polymerzusammensetzung gebildet ist, die gefaltet ist, um eine Vielzahl von Kanälen zu definieren, die sich in Längsrichtung erstrecken, wobei die Folie mit mindestens einem PHA beschichtet ist.

2. Aerosol erzeugender Artikel nach Anspruch 1, wobei das Stützelement ein hohles, röhrenförmiges Element ist, das aus Fasern hergestellt wird, die miteinander verbunden sind, um ein filterndes Element zu bilden.

3. Aerosol erzeugender Artikel nach Anspruch 2, wobei die Fasern mindestens ein PHA umfassen.

4. Aerosol erzeugender Artikel nach Anspruch 2, wobei die Fasern Fasern aus Celluloseacetat umfassen, die durch mindestens ein PHA, das die Fasern aus Celluloseacetat umgibt, miteinander verbunden sind.

5. Aerosol erzeugender Artikel nach Anspruch 1, umfassend einen Mundstückfilter, der am äußersten stromabwärtigen Ende des Aerosol erzeugenden Artikels angeordnet ist, wobei der Mundstückfilter aus Fasern hergestellt ist, die miteinander verbunden sind, um ein Filterelement zu bilden, wobei die Fasern mindestens ein PHA umfassen.

6. Aerosol erzeugender Artikel nach Anspruch 1, umfassend einen Mundstückfilter, der am äußersten stromabwärtigen Ende des Aerosol erzeugenden Artikels angeordnet ist, wobei der Mundstückfilter aus Fasern hergestellt ist, die miteinander verbunden sind, um ein Filterelement zu bilden, wobei die Fasern Fasern aus Celluloseacetat sind, die durch mindestens ein PHA, das die Fasern aus Celluloseacetat umgibt, miteinander verbunden sind.

7. Aerosol erzeugender Artikel nach Anspruch 1, wobei das Aerosol bildende Substrat eine zusammengerollte Folie aus gekräuseltem, homogenisiertem Tabakmaterial umfasst, die von einer Hülle umgeben ist, wobei das Tabakmaterial möglicherweise Glycerin als Aerosol bildner enthält.

8. Aerosol erzeugender Artikel nach Anspruch 1, wobei das PHA ein Polymer ist, das wiederkehrende Einheiten der Formel (I) enthält:
-O-CHR₁-(CH₂)n-CO (I)
wo:
R1 ausgewählt ist aus: -H, C₁-C₁₂-Alkylen, C₄-C₁₆-Cycloalkylen, C₂-C₁₂-Alkenylen, die optional mit mindestens einer Gruppe substituiert sind, die aus: Halogen (F, Cₗ, Br), - CN, -OH, -COOH, -OR, -COOR (R = C₁-C₄-Alkyl, Benzyl) ausgewählt wird;
n ist Null oder eine ganze Zahl von 1 bis 6, vorzugsweise 1 oder 2.

9. Aerosol erzeugender Artikel nach Anspruch 8, wobei das PHA aus: Polyhydroxybutyrat (PHB), Poly-3-hydroxyvalerat (PHV), Poly-3-hydroxyhexanoat (PHH), Poly-3-hydroxyoctanoat (PHO), Poly(3-hydroxybutyrat-co-3-hydroxyvalerat) (PHBV), Poly(3-hydroxybutyrat-co-3-hydroxyhexanoat) (PHBH), Poly(3-hydroxybutyrat-co-4-hydroxybutyrat), Poly(3-hydroxyoctanoat-co-3-hydroxyundecen-10-enoat) (PHOU), Poly(3-hydroxybutyrat-co-3-hydroxyvalerat-4-hydroxyvalerat) (PHBVV), Polyhydroxybutyrat-Hydroxyvalerat-Copolymer oder Mischungen davon ausgewählt wird.

10. Aerosol erzeugender Artikel nach Anspruch 1, wobei das PHA ein mittleres Molekulargewicht (Mw) im Bereich von 10.000 bis 1.000.000 Da aufweist.

11. Verwendung eines Aerosol-Kühlelements, das durch eine Folie aus einer Polymerzusammensetzung gebildet wird, die gefaltet ist, um eine Vielzahl von Kanälen zu definieren, die sich in Längsrichtung erstrecken, wobei die Folie mit mindestens einem PHA beschichtet ist, zum Löschen reaktiver Sauerstoffspezies (ROS) in dem Aerosol, das durch einen Aerosol-erzeugenden Artikel erzeugt wird, umfassend: ein Aerosol-bildendes Substrat; ein Stützelement, das unmittelbar stromabwärts des Aerosol-bildenden Substrats angeordnet ist; das Aerosol-Kühlelement, das stromabwärts des Stützelements angeordnet ist; und eine äußere Umhüllung, die das Aerosol-bildende Substrat, das Stützelement und das Aerosol-Kühlelement umschließt.

## Revendications

1. Article générateur d'aérosol (10) comprenant:
un substrat de formation d'aérosol (20);
un élément de support (30) situé immédiatement en aval du substrat de formation d'aérosol (20);
un élément de refroidissement d'aérosol (40) situé en aval de l'élément de support (30); et
une enveloppe extérieure (60) entourant le substrat de formation d'aérosol (20), l'élément de support (30) et l'élément de refroidissement d'aérosol (40);
l'élément de refroidissement d'aérosol (40) est formé d'une feuille d'une composition polymère qui est plissée pour définir une pluralité de canaux s'étendant longitudinalement, la feuille étant recouverte d'au moins un PHA.

2. Article générateur d'aérosols selon la revendication 1, dans lequel l'élément de support est un élément tubulaire creux constitué de fibres liées entre elles pour former un élément filtrant.

3. Article générateur d'aérosol selon la revendication 2, dans lequel lesdites fibres comprennent au moins un PHA.

4. Article générateur d'aérosol selon la revendication 2, dans lequel lesdites fibres comprennent des fibres d'acétate de cellulose liées entre elles au moyen d'au moins un PHA entourant les fibres d'acétate de cellulose.

5. Article générateur d'aérosol selon la revendication 1, comprenant un filtre d'embout buccal situé à l'extrémité aval de l'article générateur d'aérosol, ledit filtre d'embout buccal étant constitué de fibres liées entre elles pour former un élément filtrant, lesdites fibres comprenant au moins un PHA.

6. Article générateur d'aérosol selon la revendication 1, comprenant un filtre d'embout buccal situé à l'extrémité aval de l'article générateur d'aérosol, ledit filtre d'embout buccal étant constitué de fibres liées entre elles pour former un élément filtrant, lesdites fibres étant des fibres d'acétate de cellulose liées entre elles au moyen d'au moins un PHA entourant les fibres d'acétate de cellulose.

7. Article générateur d'aérosol selon la revendication 1, dans lequel le substrat de formation d'aérosol comprend une feuille récoltée de tabac homogénéisé frisé entourée d'une enveloppe, le tabac pouvant contenir de la glycérine en tant qu'agent de formation d'aérosol.

8. Article générateur d'aérosol selon la revendication 1, dans lequel le PHA est un polymère contenant des unités répétitives de la formule (I):
-O-CHR₁-(CH₂)ₙ-CO- (I)
où:
R₁ est choisi parmi : des alkyles en C₁-C₁₂, des cycloalkyles en C₄-C₁₆, des alcényles en C₂-C₁₂, éventuellement substitués par au moins un groupe choisi parmi: un halogène (F, Cl, Br), -CN, -OH, -OOH, -OR, -COOR (R = alkyle en C₁-C₄, benzyle);
n est zéro ou un nombre entier de 1 à 6, de préférence 1 ou 2.

9. Article générateur d'aérosol selon la revendication 8, dans lequel le PHA est choisi parmi: polyhydroxybutyrate (PHB), poly-3-hydroxyvalérate (PHV), poly-3-hydroxyhexanoate (PHH), poly-3-hydroxyoctanoate (PHO), poly(3-hydroxybutyrate-co-3-hydroxyvalérate) (PHBV), poly(3-hydroxybutyrate-co-3-hydroxyhexanoate) (PHBH), poly(3-hydroxybutyrate-co-4-hydroxybutyrate), poly(3-hydroxyoctanoate-co-3-hydroxyundecen-10-enoate) (PHOU), poly(3-hydroxybutyrate-co-3-hydroxyvalérate-4-hydroxyvalérate) (PHBVV), copolymère polyhydroxybutyrate-hydroxyvalérate, ou leurs mélanges.

10. Article générateur d'aérosol selon la revendication 1, dans lequel le PHA a un poids moléculaire moyen en poids (Mw) compris entre 10 000 et 1 000 000 Da.

11. Utilisation d'un élément de refroidissement d'aérosol formé par une feuille d'une composition polymère qui est plissée pour définir une pluralité de canaux s'étendant longitudinalement, la feuille étant recouverte d'au moins un PHA, pour tremper les espèces réactives de l'oxygène (ROS) dans l'aérosol produit par un article générateur d'aérosol comprenant: un substrat de formation d'aérosol; un élément de support situé immédiatement en aval du substrat de formation d'aérosol; ledit élément de refroidissement d'aérosol situé en aval de l'élément de support; et une enveloppe extérieure entourant le substrat de formation d'aérosol, l'élément de support et l'élément de refroidissement d'aérosol.
